# EUROPÄISCHE PATENTANMELDUNG

(11) **EP 0 597 330 A1**
(43) Veröffentlichungstag der Anmeldung: **18.05.1994**
(21) Anmeldenummer: 93117479.1
(22) Anmeldetag: 28.10.1993
(51) Int. Cl.: C09B 67/22, D06P 3/872

(54) **Reaktivfarbstoffmischung für Polyester/Cellulosefasermischungen**

(30) Priorität: 10.11.1992 DE 4237883
(71) Anmelder: BAYER AG, 51368 Leverkusen (DE)
(72) Erfinder: Wolff, Joachim, Dr., D-51519 Odenthal (DE); Hildebrand, Dietrich, Dr., D-51519 Odenthal (DE); Quecke, Bernd, D-52355 Düren (DE)

(57) **Zusammenfassung**

Ein einbadiges zweistufiges Färbeverfahren zum Färben von Polyester/Cellulosefasermischungen unter Verwendung von Dispersions- und Reaktivfarbstoffen mit verbesserter Reaktivfarbstoffausbeute verwendet Reaktivfarbstoffmischungen aus mindestens einem mono- oder bifunktionellen Monochlortriazinreaktivfarbstoff bzw. Trichlorpyrimidinreaktivfarbstoff, sowie mindestens einem mono-, bi- oder trifunktionellen Reaktivfarbstoff, welcher mindestens eine Monofluortriazin-, Mono- oder Difluorpyrimidin- und/oder Sulfatoethylsulfonyl- oder Vinylsulfonylgruppe aufweist.

## Beschreibung

Die Erfindung betrifft ein einbadiges zweistufiges Färbeverfahren zum Färben von Polyester/Cellulosefasermischungen unter Verwendung von Dispersions- und Reaktivfarbstoffen mit verbesserter Reaktivfarbstoffausbeute.

Zum Färben von Polyester/Cellulosefaser-Mischungen mit Dispersions- und Reaktivfarbstoffen nach der Ausziehmethode ist bereits das Einbad-Zweistufen-Verfahren bekannt (A.K. Jain, R.M. Mittai und N.C. Mali, Amer. Dyest. Rep. 80 (1991) 57).

Hierbei werden der Polyester- und der Cellulosefaseranteil des Textilmaterials aus demselben Bad, daher "Einbad-Verfahren", hintereinander bei unterschiedlichen pH-Werten, d.h. in zwei Stufen gefärbt.

In der ersten Stufe erfolgt die Färbung des Polyesterfaseranteils, in der zweiten Stufe erfolgt die Färbung des Cellulosefaseranteils. In der ersten Stufe ist das Bad sauer eingestellt und erreicht eine Temperatur von 120 bis 140°C, in der zweiten Stufe ist das Bad auf 80 bis 50°C abgekühlt und alkalisch eingestellt. Der Zeitablauf jeder Stufe beträgt 30 bis 60 Minuten.

Der Dispersionsfarbstoff- und der Reaktivfarbstoffbedarf der Färbung sowie der Salzbedarf in Form von Natriumsulfat für die zweite Stufe werden dem Färbebad am Anfang des Gesamtfärbeprozesses vor dem Aufheizen zugesetzt. Gleichzeitig wird Säure, in der Regel Essigsäure, zur Einstellung des gewünschten pH-Wertes der ersten Stufe zugefügt. Die pH-Umstellung von sauer nach alkalisch für die zweite Stufe erfolgt in der Regel nach dem Abkühlen von 120 bis 130°C auf 80 bis 50°C.

Bei weniger gebräuchlichen Varianten des Standardverfahrens kann der Reaktivfarbstoff und der erforderliche Salzgehalt auch erst in der zweiten Stufe dem Bad zugeführt werden.

Das Färben von Fasermischungen aus Polyester- und Cellulosefasern nach dem Einbad-Zweistufen-Verfahren hat gegenüber einem Zweibad-Verfahren den Vorteil, daß man mit kürzeren Färbezeiten, d.h. kürzeren Maschinenbelegungszeiten auskommt. Gegenüber dem Einbadeinstufen-Verfahren besitzt das Einbad-Zweistufen-Verfahren den Vorteil einer größeren Auswahl an geeigneten Dispersionsfarbstoffen.

Bei Verwendung der bisher bekannten Reaktivfarbstoffsortimente besitzt das Einbad-Zweistufen-Verfahren jedoch den Nachteil mangelnder Reaktivfarbstoffausbeute, da der im Einbad-Zweistufen-Verfahren vor dem Fixieren des Dispersionsfarbstoffes zugesetzte Reaktivfarbstoff in dem für die Fixierung des Dispersionsfarbstoffs erforderliche Temperaturbereich von 120 bis 140°C anteilweise hydrolysiert, welches zu einer deutlichen Ausbeuteminderung des Reaktivfarbstoffs führt.

Die Ausbeuteminderung durch Behandeln eines Reaktivfarbstoffs im schwach sauren pH-Bereich unter den Bedingungen einer Polyesterfärbung ist umso größer, je tiefer der Cellulosefaseranteil angefärbt werden soll, d.h. je höher die effektive Reaktivfarbstoffkonzentration im Färbebad im Bereich von 120 bis 130°C eingestellt ist.

In der Praxis wird diesem Ausbeuteverlust dadurch begegnet, daß man die Anfangssalzkonzentration des Färbebads erhöht. Dies hat jedoch den schwerwiegenden Nachteil, daß die Dispersionsstabilität der im gleichen Bad angewendeten Dispersionsfarbstoffe leidet, wodurch Ausfällungen bzw. Unegalitäten auftreten können bzw. eine strenge Auswahl geeigneter elektrolytbeständiger Dispersionsfarbstoffe erforderlich wird, wodurch das Verfahren seine allgemeine Anwendbarkeit und wirtschaftliche Attraktivität verliert.

Die Erhöhung des Salzeinsatzes hat darüber hinaus den Nachteil erhöhter Kosten und einer vermehrten Umweltbelastung, wodurch das ohnehin durch verminderte Fixierausbeuten gekennzeichnete Verfahren eingeschränkt ist.

Die vorliegende Erfindung betrifft eine Mischung aus Reaktivfarbstoffen und wenigstens einem Dispersionsfarbstoff, welche mindestens einen mono- oder bifunktionellen Monochlortriazin- bzw. Trichlorpyrimidinreaktivfarbstoff sowie mindestens einen mono-, bi- und/oder trifunktionellen Reaktivfarbstoff enthalten, welcher mindestens eine Monofluortriazin-, Mono- oder Difluorpyrimidin- und/oder β-Sulfatoethylsulfonyl- oder Vinylsulfonylgruppe aufweist.

Als Reaktivfarbstoffe kommen alle wasserlöslichen mindestens eine Sulfonsäuregruppe und/oder Carboxylgruppe aufweisende Reaktivfarbstoffe in Betracht, beispielsweise solche der Azo-, Kupferazo-, Kupferformazan-, Anthrachinon-, Phthalocyanin-, Triphendioxazinreihe.

Es wurde nun überraschenderweise gefunden, daS ein Einbad-Zweistufen-Verfahren zum Färben von Polyester/Cellulosefaser-Mischungen mit reduziertem Salzeinsatz und verbesserter Fixierausbeute an Reaktivfarbstoff durchgeführt werden kann. Die Erfindung betrifft daher weiterhin ein einbadiges zweistufiges Färbeverfahren zum Färben von Polyester/Cellulosefasermischungen, dadurch gekennzeichnet, daß eine erfindungsgemäße Mischung verwendet wird.

Ein weiterer Vorteil besteht in dem tongleichen Aufziehen der Reaktivfarbstoffe unter den erfindungsgemäßen Verfahrensbedingungen, was ein hohes Maß an Reproduzierbarkeit gewährleistet.

Bevorzugt geeignet sind Reaktivfarbstoffmischungen aus 40 bis 60 Gew.-% eines Monochlortriazin oder eines Bismonochlortriazinfarbstoffs und 60 bis 40 Gew.-% eines mindestens eine Monofluortriazin-, Monofluorpyrimidin-, Difluorpyrimidin- bzw. Sulfatoethylsulfonyl- oder Vinylsulfonylgruppe enthaltenden Reaktivfarbstoffs.

Das erfindungsgemäße Verfahren erfolgt vorzugsweise nach folgendem Schema:

| Zeit (Min.) | pH gemessen bei 25°C | Temp. (°C) | Maßnahme |
|---|---|---|---|
| 0 | 6-8,2 | 20-60 | Pufferzusatz |
| 10 | 6-8,2 | 20-60 | Salzzusatz |
| 30 | 6-8,2 | 40-60 | Reaktivfarbstoffzusatz |
| 60 | 6-8,2 | 40-60 | Verweilen |
| 70 | 6-8,2 | 40-60 | Dispersionsfarbstoffzusatz |
| 130 | 6-8,2 | 130 | Aufheizen |
| 160 | 6-8,2 | 130 | Verweilen |
| 170 | 6-8,2 | 80 | Abkühlen |
| 200 | 6-8,2 | 80 | Fixieralkali zusetzen |
| 230 | 10,5-10,8 | 80 | Verweilen |
| 240 | 10,5-10,8 | 80 | Probenahme |
| 250 | 10,5-10,8 | 80 | Ablassen |
| 270 | 10,5-10,8 | 30 | Spülen |
| 290 | 10,5-10,8 | 40 | Spülen |
| 310 | 10,5-10,8 | 60 | Spülen |
| 315 | 10,5-10,8 | 60 | Füllen |
| 320 | 10,5-10,8 | 60 | Waschmittel zusetzen |
| 330 | 10,5-10,8 | 80 | Aufheizen |
| 345 | 10,5-10,8 | 80 | Verweilen |
| 350 | 10,5-10,8 | 60 | Ablassen |
| 360 | 10,5-10,8 | 20 | Spülen |
| 370 | 10,5-10,8 | 20 | Färbegut entnehmen |

Die verfahrensgemäß einzusetzenden Dispersionsfarbstoffe stellen vorzugsweise handelsübliche Dispersionsfarbstoffe aus der Azo- und Anthrachinonreihe dar.

In einer besonders bevorzugten Ausführungsform wird bei dem erfindungsgemäßen Verfahren ein Puffer zugesetzt, insbesondere vor Zugabe der Farbstoffe.

Als verfahrensgemäß mitzuverwendende Puffer kommen die bekannten anorganischen Puffergemische in Betracht, die in wäßriger Lösung einen Raumtemperatur-Anfangs-pH-Wert von 6,0 bis 8,5, bevorzugt 7,5 bis 8,0 ergeben. Besonders bewährt haben sich Natrium- bzw. Kaliumbicarbonat allein und/oder in Mischung mit Dinatrium- bzw. Dikaliumphosphat bzw. Mischungen von Mono- und Trinatrium- bzw. Kaliumphosphat, Borax und/oder Lithiumcarbonat. Der Raumtemperatur-pH-Wert des Bades kann sich während des Färbens bei 130°C verändern, ohne dadurch den Verfahrensablauf zu beeinträchtigen oder zu verändern. Die einzusetzenden Puffermengen liegen im allgemeinen bei 0,5 bis 3 g/l, vorzugsweise bei 1 bis 2 g/l.

Als Fixieralkali kommen handelsübliche Alkalien wie Soda und/oder Natronlauge in Betracht. Sie können dem Färbebad in fester oder flüssiger Form, bevorzugt in Form verdünnter wäßriger Lösungen zugesetzt werden, wobei das Volumen der Fixieralkalilösung bevorzugt 3 bis 10 % des Färbebades beträgt. Die Menge an zuzusetzendem Fixieralkali richtet sich nach der Menge an eingesetztem Reaktivfarbstoff.

Im allgemeinen haben sich Alkalimengen von 5 bis 20, bevorzugt 10 bis 20 g/l Soda wasserfrei und/oder 1 bis 4 ccm/l Natronlauge 38° Be als am günstigsten erwiesen.

Als verfahrensgemäß zu verwendendes Salz kommen sowohl Natriumsulfat als auch Natriumchlorid, bevorzugt Natriumsulfat in Betracht.

Der Verwendung von Natriumchlorid als Elektrolyt unter Hochtemperatur-Färbebedingungen wird durch den schwach alkalisch eingestellten gepufferten Färbe-pH der ersten Stufe des Verfahrens Rechnung getragen. Das beanspruchte Verfahren ermöglicht damit nicht nur eine Verbesserung der Fixierausbeuten bei mäßigem Salzeinsatz, sondern gegebenenfalls auch die Verwendung des Natriumchlorids anstelle von Natriumsulfat, welches bei den nach Stand der Technik üblichen Einbadverfahren eingesetzt wird. Die Menge des zu verwendenden Salzes richtet sich nach der Farbtiefe und der Flottenlänge. Sie beträgt bei hellen Färbungen 20 bis 40 g/l und bei tiefen 40 bis 80 g/l. Das Verfahren kann auf allen handelsüblichen für die Hochtemperaturfärberei (von 130 bis 140°C) zugelassenen Färbeaggregaten, wie sie zum Färben von Polyester/Cellulosefasermischungen Verwendung finden, durchgeführt werden.

Besonders vorteilhaft ist die Anwendung des Verfahrens zum Färben von Polyester/Cellulosefasermischungen auf Kurzflotten- und Ultrakurzflottenaggregaten und Apparaten, da hier die Vorlage von hohen Salzkonzentrationen leicht zu einem Ausfallen des Dispersionsfarbstoffs führt und das Auswaschen des nicht fixierten Hydrolysates erschwert. Das erfindungsgemäße Verfahren erzielt daher speziell auf den neuentwickelten Färbeanlagen unter deutlicher Einsparung von Wasser und Salz Färbungen mit verbesserter Farbausbeute und verbesserten Echtheitseigenschaften.

Als zu färbende Polyester/Cellulosefasermischungen kommen nach dem erfindungsgemäßen Verfahren solche aus nativer Cellulose wie insbesondere Baumwolle und Leinen als auch solche aus Regeneratcellulosefasern wie Viskoseendlos (Viscose rayon) und Zellwollstapel in Betracht. Die Polyester/Cellulosefasermischungen können in ihren Mischungsverhältnissen zwischen 10/90 und 90/10 schwanken, sie liegen i.a. zwischen 80/20 und 20/80, bevorzugt zwischen 70/30 und 30/70.

Folgende Farbstoffe und Kombinationen daraus sind besonders bevorzugt: 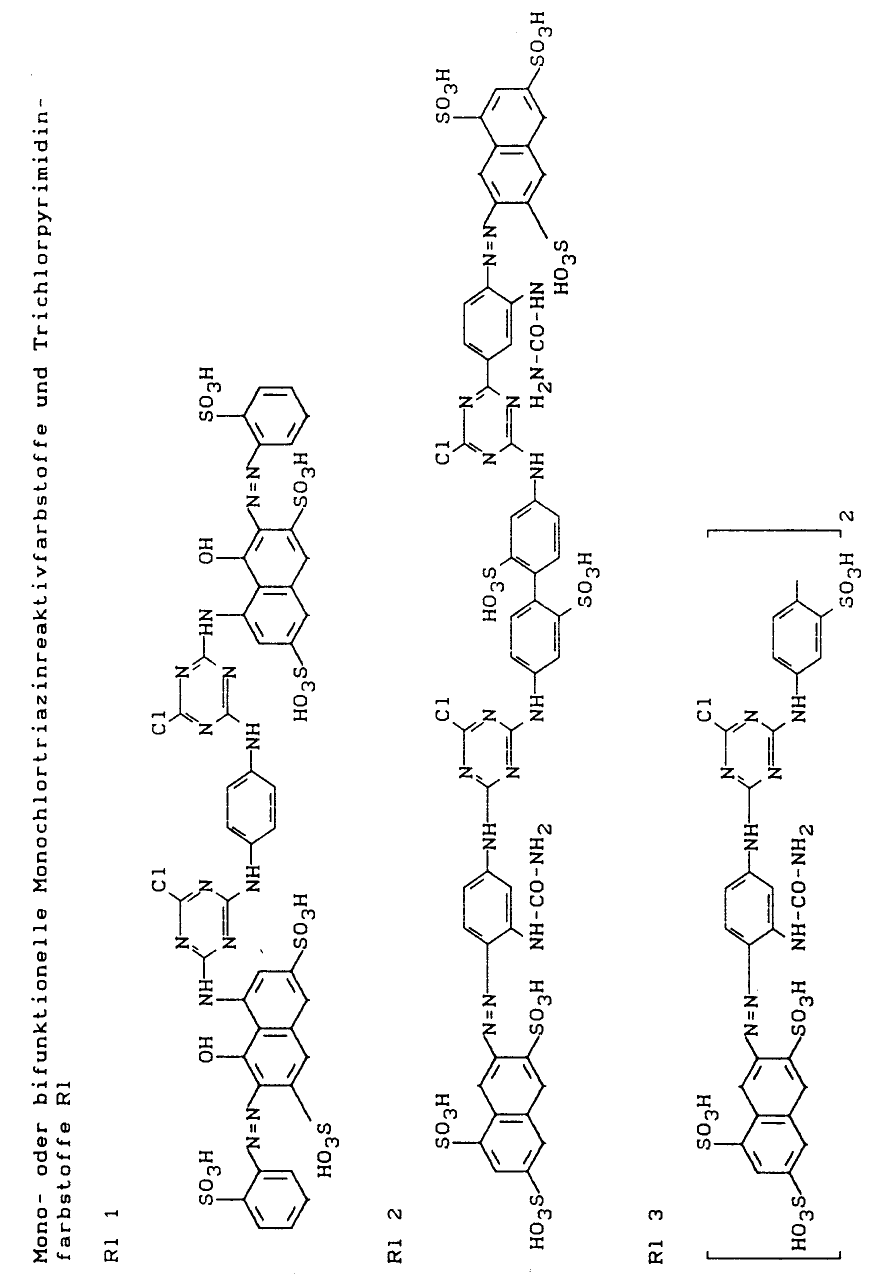 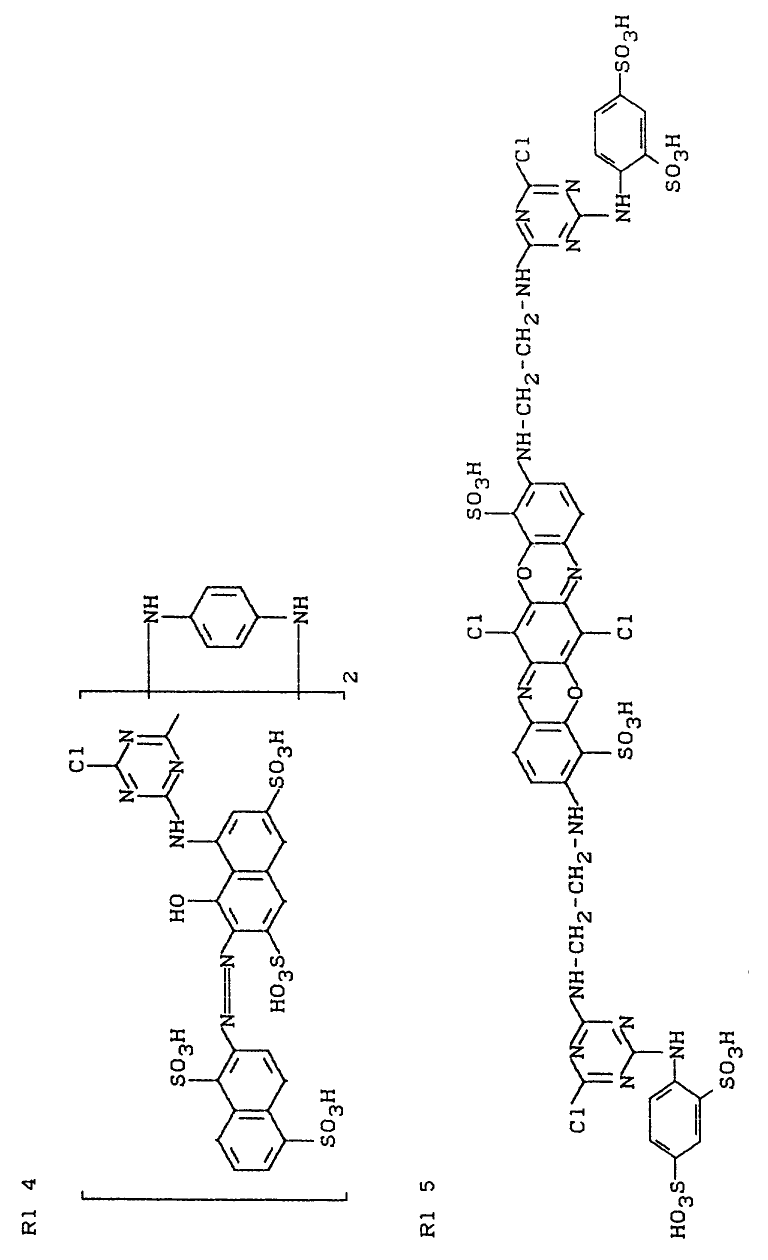 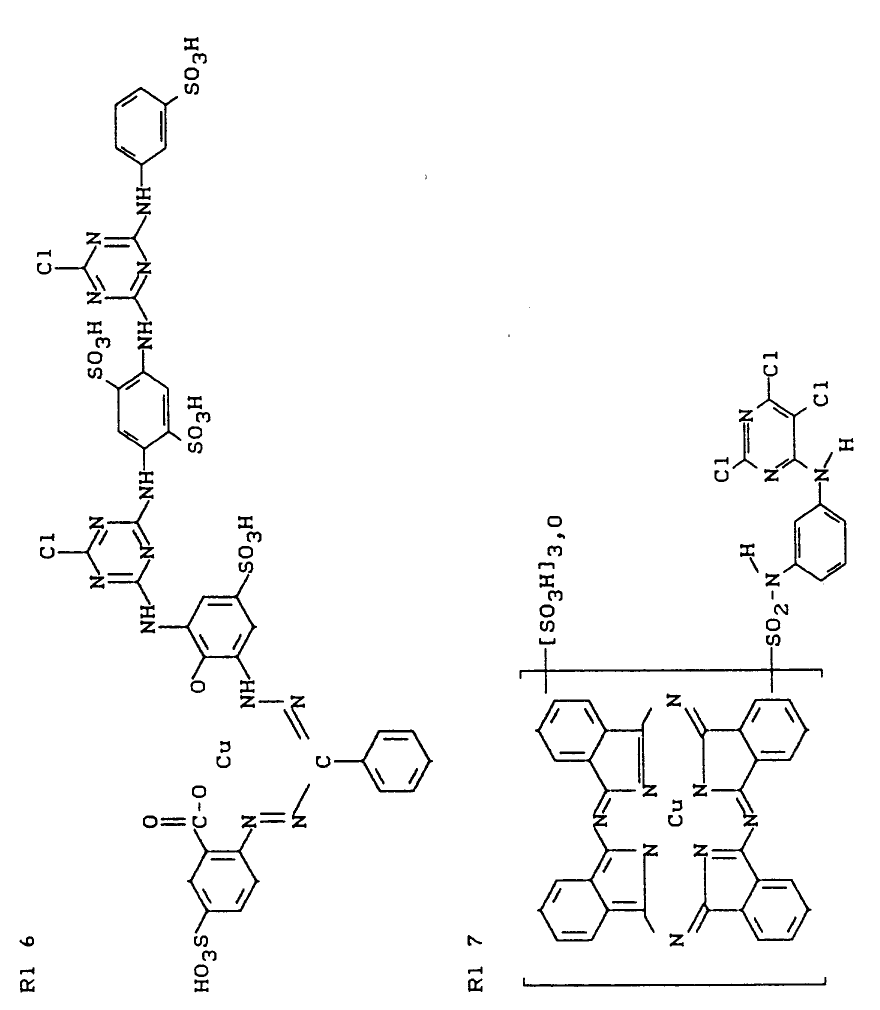
Mono-, bi- oder trifunktionelle Reaktivfarbstoffe mit mindestens einer Monofluortriazin-, Mono- oder Difluorpyrimidin- und/oder Sulfatoethylsulfonyl- oder Vinylsulfonylgruppe Rh 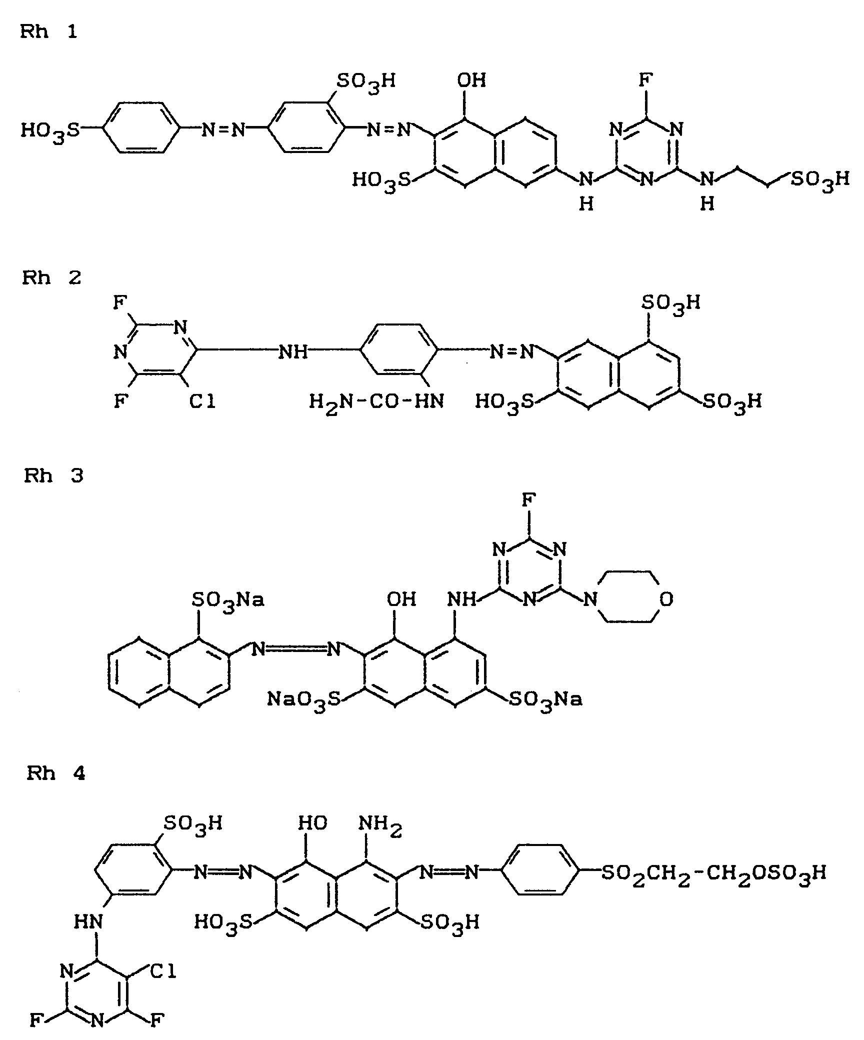 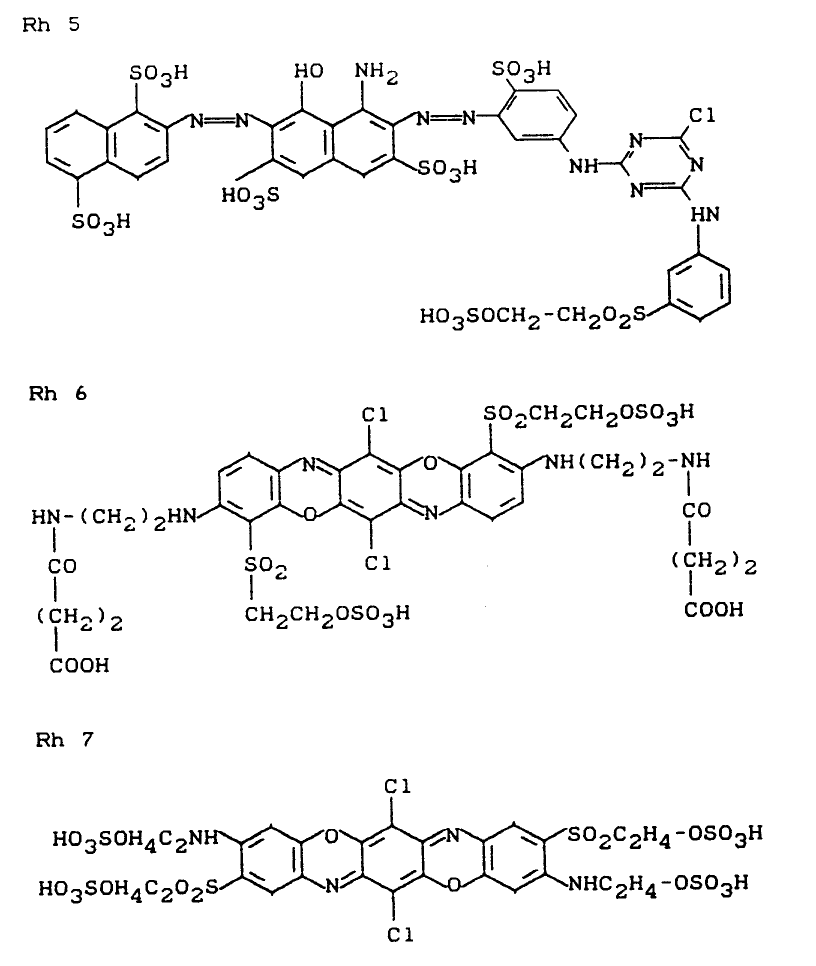 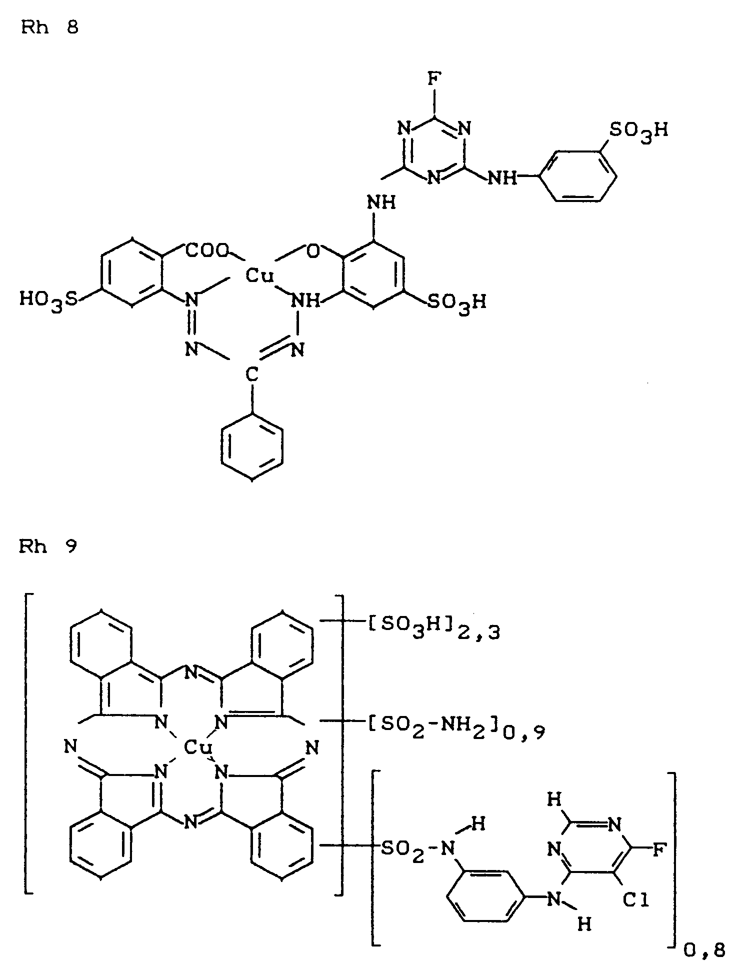 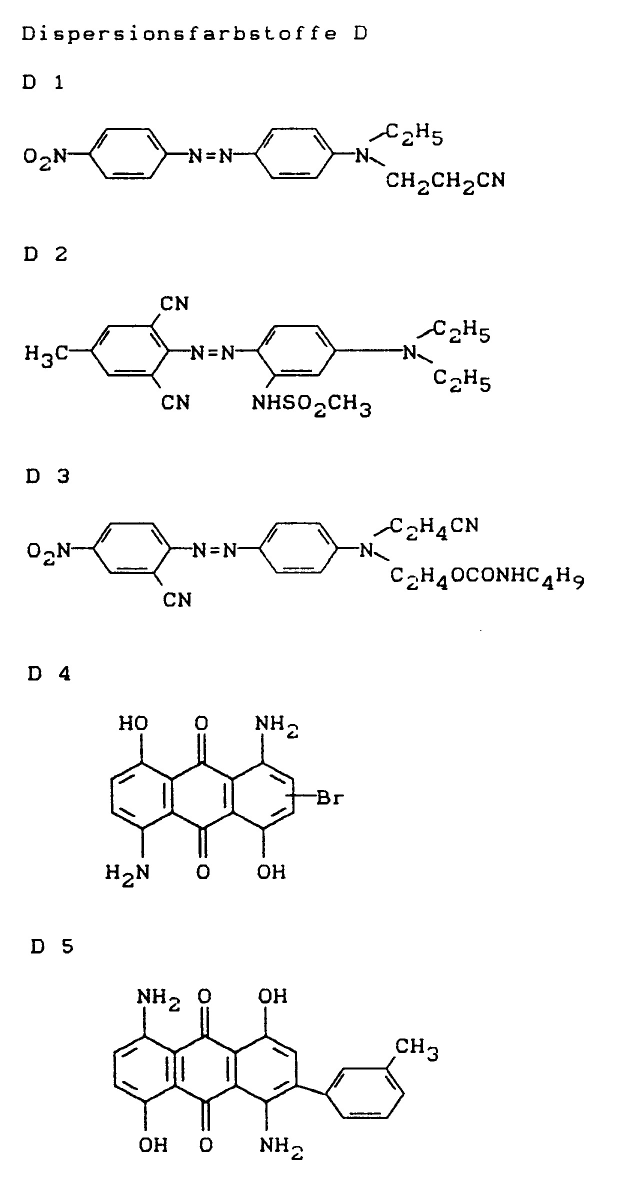 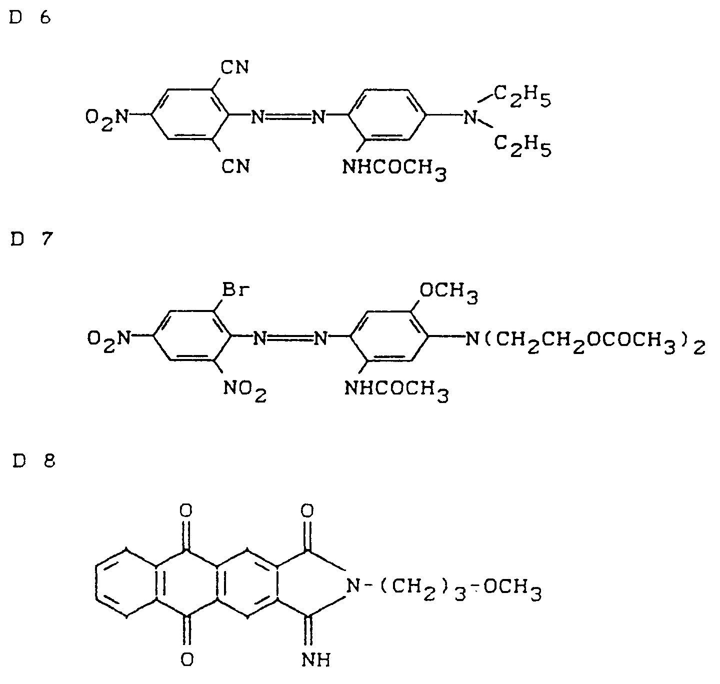
Soweit nicht anders angegeben ist, geben die Mengenangaben in den folgenden Beispielen Gewichtsteile an.

### Beispiel 1

100 Teile einer Polyesterfaser/Baumwoll-Maschenware bestehend aus 40 Teilen Polyesterfaser und 60 Teilen Baumwolle werden auf einem handelsüblichen Jetfärbeaggregat (Eco Soft der Fa. Thies, Coesfeld) mit 900 Teilen einer 60°C warmen wäßrigen Färbeflotte behandelt, welche
60 Teile Natriumsulfat wasserfrei
1 Teil eines handelsüblichen anionischen Dispergiermittels
2 Teile Natriumbicarbonat
2,41 Teile einer Reaktivfarbstoffmischung aus
60 Teilen Rh 1,
14,5 Teilen Rl 1 und
25,5 Teilen Rl 2
0,15 Teile des Farbstoffs D1 und
0,30 Teile des Farbstoffs D2
enthält.

Die Ware wird bei lebhafter Flottenzirkulation 10 Minuten bei dieser Temperatur behandelt und anschließend in 60 Minuten auf 130°C aufgeheizt und 30 Minuten bei dieser Temperatur gefärbt. Daraufhin wird in 10 Minuten auf 80°C abgekühlt und anschließend innerhalb von 30 Minuten 100 Teile einer 10 Teile Soda enthaltenden Fixierlösung hinzugefügt. Die Ware wird dann weitere 60 Minuten bei 80°C behandelt und anschließend die Flotte abgelassen. Es wird zweimal mit 60°C warmem Wasser gespült und 15 Minuten bei 80°C mit einem handelsüblichen nichtionaktiven Waschmittel geseift und anschließend gespült.

Man erhält eine klare Rotfärbung mit guten Echtheitseigenschaften.

### Beispiel 2

100 Teile einer Polyester/Baumwoll-Maschenware bestehend aus 40 Teilen Polyesterfaser und 60 Teilen Baumwolle werden auf einem handelsüblichen Jetfärbeaggregat (Rotostream der Fa. Thies, Coesfeld) mit 900 Teilen einer 60°C warmen wäßrigen Färbeflotte behandelt, welche
80 Teile Natriumchlorid
1 Teil eines handelsüblichen anionischen Dispergiermittels
2 Teile eines Puffergemisches bestehend aus
25 Teilen Trinatriumphosphat
5 Teilen Mononatriumphosphat · 2H₂O
50 Teilen monochloressigsaurem Natrium wasserfrei
1,30 Teile einer Reaktivfarbstoffmischung aus
50 Teilen Rl 3 und
50 Teilen Rh 2
3,10 Teile einer Reaktivfarbstoffmischung aus
50 Teilen Rl 4 und
50 Teilen Rh 3
0,5 Teile einer Reaktivfarbstoffmischung aus
50 Teilen Rh 4 und
50 Teilen Rh 5
1,35 Teile des Farbstoffs D3 und
0,11 Teile des Farbstoffs D4
enthält.

Die Ware wird bei lebhafter Flottenzirkulation 10 Minuten bei dieser Temperatur behandelt und anschließend in 60 Minuten auf 130°C erwärmt und 30 Minuten bei dieser Temperatur gefärbt. Daraufhin wird in 10 Minuten auf 80°C abgekühlt und anschließend im Abstand von jeweils 15 Minuten in drei Portionen von je 5 Teilen Soda in fester Form zugesetzt und weitere 30 Minuten bei dieser Temperatur gefärbt.

Anschließend wird die Flotte abgelassen, zweimal bei 60°C und zweimal bei 80°C gespült und anschließend zweimal bei 80°C in Gegenwart von 2 Teilen eines nichtionogenen/anionischen Waschmittels 15 Minuten geseift. Daraufhin wird kalt gespült.

Man erhält eine bordeauxrote Färbung mit guten Echtheitseigenschaften.

### Beispiel 3

100 Teile eines Polyester/Baumwollmischgarnes bestehend aus 50 Teilen Polyesterfaser und 50 Teilen Baumwolle werden auf einem handelsüblichen Garnfärbeapparat mit 600 Teilen einer 40°C warmen wäßrigen Färbeflotte behandelt, welche
50 Teile Natriumchlorid
1 Teil eines handelsüblichen anionischen Dispergiermittels
1 Teil Natriumhexametaphosphat
2 Teile Natriumbicarbonat
1 Teil m-Nitrobenzolsulfonat
1,9 Teile einer Reaktivfarbstoffmischung aus
30 Teilen Rl 5 und
70 Teilen Rh 6 und/oder Rh 7
1,1 Teile des Farbstoffs D5
enthält.

Die Flotte wird in 90 Minuten auf 130°C erwärmt und 30 Minuten bei dieser Temperatur zirkuliert. Anschließend wird auf 80°C abgekühlt und aus dem Zusatztank innerhalb von 45 Minuten 60 Teile einer Alkalilösung, welche 5 Teile Soda wasserfrei sowie 2 Teile Natronlauge 38° Be gelöst enthält, zudosiert. Anschließend wird 15 Minuten bei 80°C gefärbt und die Flotte abgelassen.

Es wird zweimal bei 60°C und zweimal bei 80°C gespült, anschließend 15 Minuten unter Mitverwendung von 1 Teil eines anionisch/nichtionogenen Waschmittels bei 80°C geseift und kalt gespült.

Man erhält eine tiefe Blaufärbung mit guten Echtheitseigenschaften.

### Beispiel 4

100 Teile eines Polyester-Viskosefaser-Mischgewebes bestehend aus 50 Teilen Polyesterfaser und 50 Teilen Viskosefaser werden auf einem HT-Kurzflottenjet (Ringsoft der Fa. Thies, Coesfeld) mit 750 Teilen einer 60°C warmen wäßrigen Färbeflotte behandelt, welche
60 Teile Natriumsulfat wasserfrei
1 Teil eines handelsüblichen anionischen Dispergiermittels
1 Teil m-Nitrobenzolsulfonsäure
0,5 Teile Essigsäure 60 %ig
1 Teil Borax
2,2 Teile einer Reaktivfarbstoffmischung aus
55 Teilen Rl 6 und
45 Teilen Rh 8
1,8 Teile des Farbstoffs D6
enthält.

Die Ware wird bei lebhafter Flottenzirkulation 10 Minuten bei dieser Temperatur behandelt und anschließend in 70 Minuten auf 130°C aufgeheizt und 30 Minuten bei dieser Temperatur gefärbt. Daraufhin wird in 10 Minuten auf 80°C abgekühlt und anschließend innerhalb von 60 Minuten 50 Teile einer alkalischen Fixierlösung zudosiert, welche 5 Teile Pottasche und 1 Teil 40 %ige Kalilauge gelöst enthält, anschließend wird 60 Minuten bei 80°C gefärbt. Danach wird die Flotte abgelassen, zweimal kalt und zweimal warm (60°C) gespült und anschließend zweimal jeweils 15 Minuten unter Mitverwendung von 1 Teil eines anionisch/nichtionogenen Waschmittels bei 80°C geseift und kalt gespült.

Man erhält eine Blaufärbung mit guten Echtheitseigenschaften.

### Beispiel 5

100 Teile eines Polyester/Baumwollmischgewebes bestehend aus 50 Teilen Polyesterfaser und 50 Teilen Baumwolle werden auf einem HT-Kurzflottenjet (Airflow der Fa. Then) mit 420 Teilen einer 70°C warmen Färbeflotte behandelt, welche
40 Teile Natriumsulfat
1 Teil eines handelsüblichen anionischen Dispergiermittels
1 Teil Essigsäure 60 %ig
3,8 Teile einer Reaktivfarbstoffmischung aus
50 Teilen Rh 4 und
50 Teilen Rh 5
2,4 Teile des Farbstoffs D7
enthält.

Die Flotte wird in 60 Minuten auf 130°C erwärmt und 30 Minuten bei dieser Temperatur zirkuliert. Anschließend wird auf 60°C abgekühlt, in 60 Minuten 30 Teile einer Fixierlösung zugegeben, welche 4 Teile Soda wasserfrei und 2 Teile Natronlauge 38° (Be) enthält. Anschließend wird 15 Minuten bei dieser Temperatur gefärbt und die Flotte abgelassen. Es wird zweimal bei 60°C und zweimal bei 80°C gespült und anschließend 15 Minuten unter Mitverwendung von 1 Teil eines nichtionogenen Waschmittels bei 80°C geseift und zweimal kalt gespült.

Man erhält eine Marineblaufärbung mit guten Echtheitseigenschaften.

### Beispiel 6

100 Teile eines Polyester-Viskosefaser/Leinen-Mischgewebes bestehend aus 30 Teilen Polyesterfaser, 40 Teilen Viskosefaser und 30 Teilen Leinen werden auf einem handelsüblichen HT-Overflowfärbeapparat mit Zusatzpumpe und Ansatzgefäß mit 1150 Teilen einer 60°C warmen, wäßrigen Färbeflotte behandelt, welche
80 Teile Natriumsulfat wasserfrei
1 Teil eines handelsüblichen anionischen Dispergiermittels
1 Teil Mononatriumphosphat · 2 H₂O
0,5 Teile Trinatriumphosphat
0,7 Teile des Farbstoffs D8
2,8 Teile einer Reaktivfarbstoffmischung aus
50 Teilen Rh 9 und
50 Teilen Rl 8
enthält.

Die Flotte wird in 60 Minuten auf 135°C erwärmt und 20 Minuten bei dieser Temperatur zirkuliert. Anschließend wird auf 60°C abgekühlt und 100 Teile einer Fixierlösung zugegeben, welche 10 Teile Soda wasserfrei enthält. Anschließend wird in 30 Minuten auf 90°C erwärmt und 60 Minuten bei dieser Temperatur gefärbt. Daraufhin wird auf unter 80°C abgekühlt und die Flotte abgelassen. Es wird zweimal bei 60°C und zweimal bei 80°C gespült und daraufhin 15 Minuten unter Mitverwendung von 1 Teil eines nichtionogenen Waschmittels bei 90 bis 95°C geseift. Anschließend wird warm und kalt gespült.

Man erhält eine klare Türkisblaufärbung mit guten Echtheitseigenschaften.

## Patentansprüche

1. Mischung aus Reaktivfarbstoffen und wenigstens einem Dispersionsfarbstoff, dadurch gekennzeichnet, daß die Mischung mindestens einen mono- oder bifunktionellen Monochlortriazin- bzw. Trichlorpyrimidinreaktivfarbstoff sowie mindestens einen mono-, bi- und/oder trifunktionellen Reaktivfarbstoff enthält, welcher mindestens eine Monofluortriazin-, Mono-oder Difluorpyrimidin- und/oder β-Sulfatoethylsulfonyl- oder Vinylsulfonylgruppe aufweist.

2. Mischung nach Anspruch 1, dadurch gekennzeichnet, daß die Reaktivfarbstoffe mindestens eine wasserlöslichmachende Sulfonsäuregruppe und/oder Carboxylgruppe aufweisen.

3. Mischung nach Anspruch 1, dadurch gekennzeichnet, daß die Reaktivfarbstoffe aus der Azo-, Kupferazo-, Kupferformazan-, Anthrachinon-, Phthalocyanin-, Triphendioxazinreihe kommen.

4. Mischung nach Anspruch 1, dadurch gekennzeichnet, daß als Dispersionsfarbstoff ein Azo- und/oder Anthrachinonfarbstoff enthalten ist.

5. Färbeverfahren zum Färben von Polyester/Cellulosefasermischungen unter Verwendung von Dispersions- und Reaktivfarbstoffen mit verbesserter Reaktivfarbstoffausbeute, dadurch gekennzeichnet, daß Reaktivfarbstoffmischungen verwendet werden, welche mindestens einen mono- oder bifunktionellen Monochlortriazin- bzw. Trichlorpyrimidinreaktivfarbstoff sowie mindestens einen mono-, bi- und/oder trifunktionellen Reaktivfarbstoff enthalten, welcher mindestens eine Monofluortriazin-, Monofluor- oder Difluorpyrimidin- und/oder Sulfatoethylsulfonyl- oder Vinylsulfonylgruppe aufweist.

6. Färbeverfahren nach Anspruch 5, dadurch gekennzeichnet, daß das Verfahren als einbadig zweistufiges Verfahren durchgeführt wird.

7. Färbeverfahren nach Anspruch 5, dadurch gekennzeichnet, daß das Verfahren unter Mitverwendung von Puffergemischen durchgeführt wird, welche im Temperaturbereich von 110 bis 140°C einen Färbebad-pH von 6,0 bis 8,5, bevorzugt 7,5 bis 8,0, einstellen.

8. Verfahren nach Anspruch 5, dadurch gekennzeichnet, daß das Verfahren unter Mitverwendung eines säureabspaltenden Mittels durchgeführt wird.

9. Gefärbte Polyester/Cellulosefasermischungen, die mit einem Dispersionsfarbstoff, mindestens einem mono-oder bifunktionellen Monochlortriazin- bzw. Trichlorpyrimidinreaktivfarbstoff sowie mindestens einem mono-, bi- und/oder trifunktionellen Reaktivfarbstoff gefärbt sind, welcher mindestens eine Monofluortriazin-, Mono- oder Difluorpyrimidin- und/oder β-Sulfatoethylsulfonyl- oder Vinylsulfonyl aufweist.
